# EUROPEAN PATENT APPLICATION

(11) **EP 0 797 309 A2**
(43) Date of publication of application: **24.09.1997**
(21) Application number: 97301676.9
(22) Date of filing: 12.03.1997
(51) Int. Cl.: H04B 1/12, H04B 10/158

(54) **Optical wavelength demultiplexer for a video passive optical network**

(30) Priority: 22.03.1996 US 620959
(71) Applicant: LUCENT TECHNOLOGIES INC., Murray Hill, New Jersey 07974-0636 (US)
(72) Inventor: Ota, Yuske, Mountain Lakes, New Jersey 07046 (US); Swartz, Robert Gerald, Tinton Falls, New Jersey 07724 (US)
(74) Representative: Watts, Christopher Malcolm Kelway, Dr.

(57) **Abstract**

In a system where a second signal interferes with the detection of a first signal at an input, in which the second signal is composed of a low frequency component and a portion of the frequency spectrum that is higher than that of the first signal, then both signals are processed to eliminate such interference by filtering the second signal to eliminate the portion of the frequency spectrum that is higher than that of the first signal and eliminate the low frequency component of the second signal. Advantageously, such processing is done without affecting any low frequency component of the first signal.

## Description

### FIELD OF THE INVENTION

The invention relates to the demultiplexing of optical signals.

### BACKGROUND OF THE INVENTION

An Optical Network Unit (ONU) that is arranged to receive multimedia applications at an end-user location needs to include a demultiplexer to separate 1.3 µm wavelength digital data signals and 1.55 µm wavelength video signals from one another as they are received from a video-passive optical network (V-PON) via a common optical fiber communications path. One important criterion that needs to be met in performing such demultiplexing is providing more than 40 dB of isolation between the optical signal is to keep the level of "cross-talk" between the demultiplexed optical signals to a minimum. This multiplexing goal may be met by using a multistage WDM splitter providing excellent isolation (> 45 dB) between 1.30µm and 1.55µm wavelength signals or by using a single stage WDM splitter in combination with an optical filter. Disadvantageously, such an approach is either too costly or its insertion loss is too high. Because of this, a purely optical approach to solving the problem of "optical signal isolation" is not a good choice for use in an ONU.

### SUMMARY OF THE INVENTION

We have recognized that the aforementioned required level of isolation may be readily met by using a relatively inexpensive electrical approach rather than the more costly and purely optical approach of using a multistage WDM optical splitter or a single stage optical splitter with an optical filter. In a V-PON, the more stringent requirement is to prevent the 1.55µm video signal from interfering with the proper detection of the 1.3µm digital data signal.

We achieve this result by first recognizing that the interfering video signal is a RF radio-frequency waveform having frequency components in the high (RF) frequency domain as well as at low frequency near dc (proportional to the net average optical power of the interfering video signal). Accordingly, we deal with both the high frequency and low frequency components to prevent them from interfering with the information carried in the digital signal. Specifically, the low frequency component of the interfering video signal may be eliminated using a non-linear adaptive cancellation process that does not interfere with the detection of the low frequency component of the digital signal. Moreover, an RC time constant at a preamplifier input contained in the canceler may be set so that it "filters out" the RF component of the interfering video signal, thereby effectively eliminating the interfering (unwanted) video signal from the digital data stream.

The foregoing electrical approach thus significantly advances the art of multiplexing optical signals when there is a strong need to provide a high level of isolation between multiplexed optical signals.

### BRIEF DESCRIPTION OF THE DRAWING

FIG. 1 is a broad block diagram of an illustrative burst mode receiver;
FIG. 2A illustrates an optical signal of a particular power level and the resulting photocurrent in burst mode communication;
FIG. 2B illustrates a signal recovered from the signal of FIG. 2A at the output of an amplifier A₁;
FIG. 3 illustrates an offset voltage level, V_{off}, that needs to be generated to offset the effect of the interfering signal;
FIG. 4 is a broad block diagram of the burst mode receiver of FIG. 1 further arranged to adaptively generate the offset signal that cancels the interfering signal;
FIG. 5A illustrates the case in which the incoming photocurrent shown in FIG. 2A includes a digital data signal but does not include the interfering video signal; and
FIG. 5B illustrates the case in which the incoming photocurrent shown in FIG. 2A does include the interfering video signal.

### DETAILED DESCRIPTION

In a Video-Passive Optical Network (V-PON), bursty digital data signals and broadcast video signals may be transmitted simultaneously over an optical fiber. This may be done using Wavelength Division Multiplexing (WDM) to transmit simultaneously different optical signals having respective wavelengths λᵥ (video) and λ_{d} (data) over the same optical fiber. Typically, λᵥ and λ_{d} are 1.55 µm and 1.3 µm. Also, the video carrier frequency, f_{c}, is usually much higher than the frequency range of the receiver that will receive the digital data.

Thus, the digital data receiver must recover the bursty optical data signal, and do so by neutralizing the interference resulting from the presence of the optical video signal. We have recognized that a burst-mode receiver having non-linear dc cancellation may be used for such a purpose. One such receiver is disclosed in our U. S. Patent 5,025,456 issued on June 18, 1992, entitled "Burst Mode Digital Data Receiver", which is hereby incorporated by reference. Accordingly, the following is discussed in the context of the referenced receiver. However, that should not be construed as a limitation, since it will be appreciated that other techniques may also be used to implement the principles of our invention.

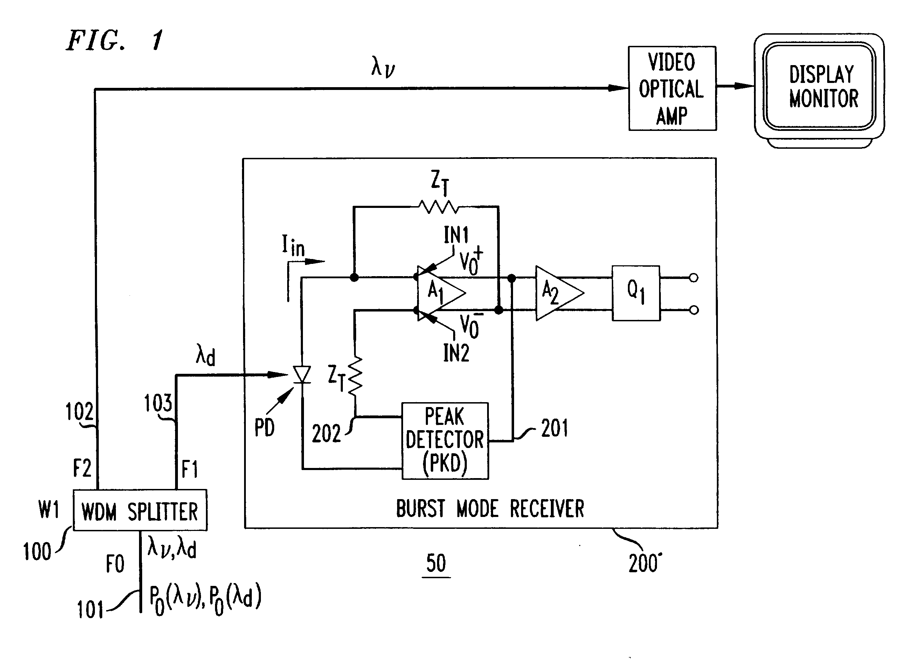

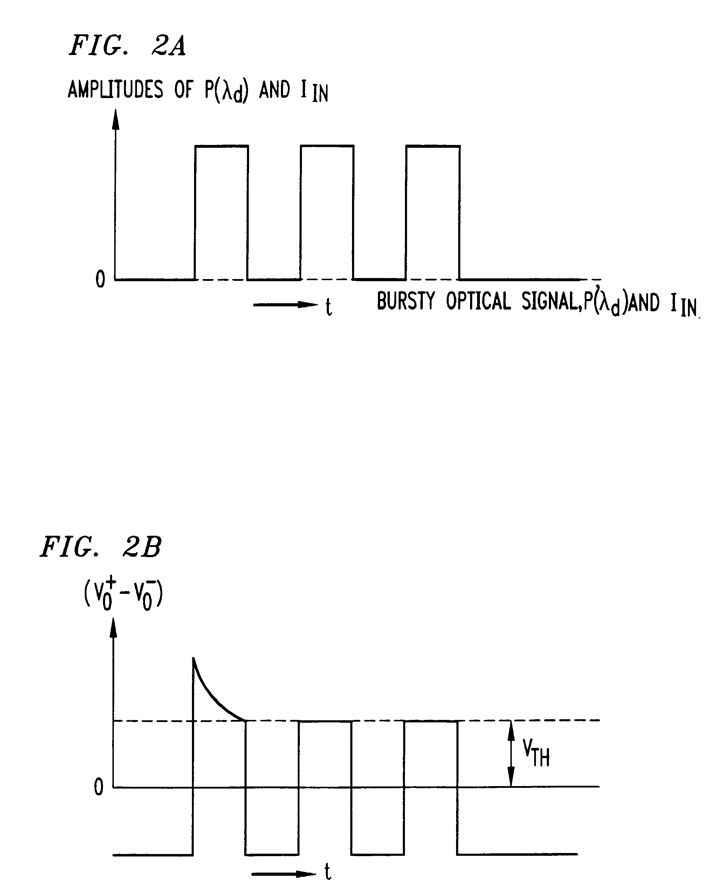

Turning then to FIG. 1, ONU 50 includes WDM splitter 100 which demultiplexes (separates) a video signal of wavelength λᵥ and digital data signal of wavelength λ_{d} received via optical path 101 onto optical fiber paths 102 and 103, respectively. If WDM splitter 100 were "ideal" - meaning that the isolation between the signals was infinite - then the 1.55 µm wavelength optical signal would not be coupled to path 103, and, therefore would not interfere with receiver 200. However, when the optical digital data is coupled to photodetector PD, the latter generates current Iᵢₙ which is supplied to a first input of amplifier A₁. Amplifier A₁, in turn, converts that input current into voltage levels (signal) Vₒ ⁺, Vₒ ⁻, where Vₒ ⁻ = Vₒ ⁺. The voltage Vₒ ⁺ is then stored in peak-detector PKD via path 201. An output of PKD is supplied to a second input of amplifier A₁ via path 202 and resistor Z_{T} to establish an appropriate logic threshold, as is illustrated in FIGs. 2A and 2B. Specifically, FIG. 2A illustrates an optical signal having an optical power of P(λ_{d}) and photocurrent I_{IN}. FIG. 2B, on the other hand, illustrates a waveform of the differential recovered voltage signal Vₒ ⁺ - Vₒ ⁻. Peak-detector PKD, FIG. 1, operates, as will be discussed below, to generate a threshold voltage V_{TH} that is substantially equal to the voltage swing of Vₒ ⁺ that is equivalent to one-half of the maximum output signal swing. This condition may be met if the isolation provided by WDM splitter 100 were infinite. However, such isolation is typically 20 dB. Moreover, since the power of the interfering optical video signal supplied to splitter 100 could be approximately 10,000 times (40 dB) greater than the power of the optical digital signal that is also supplied to splitter 100, then the optical power of the video signal that is coupled into path 103 may be approximately 100 times (20 dB) greater than the optical power of the digital data signal (i.e., the larger 40 dB video optical signal is attenuated 20 dB by the wavelength isolation of the splitter, thus becoming 40 dB - 20 dB = 20 dB (100 times) larger than the digital data signal).

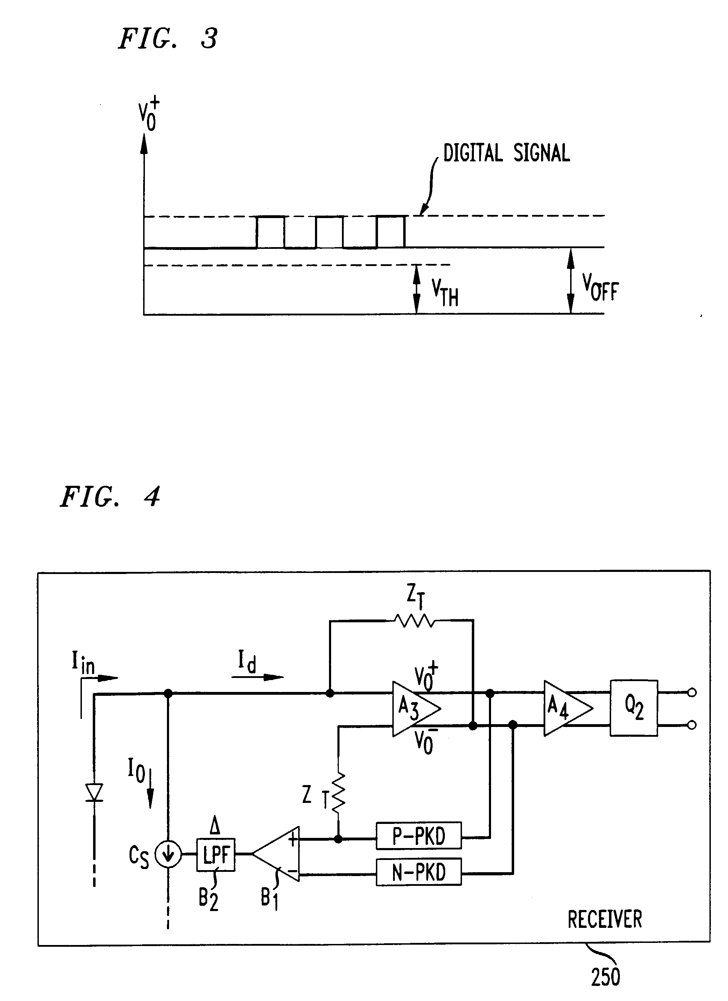

If the video carrier frequency, f_{c}, is much greater than the upper limit of the bandwidth range, BWd, of the digital receiver, then the receiver cannot quickly respond to a video signal modulated onto a carrier of f_{c}. In that case, digital receiver 200 tends to filter the high-frequency components of the video signal near f_{c}, and outputs only the low-frequency average power signal of the received video signal defined herein as Iₒ. Signal Iₒ is translated to the output Vₒ ⁺ of amplifier A₁ in the form of an offset voltage V_{off} illustrated in FIG. 3. As noted earlier, peak-detector PKG sets the logic threshold at one-half of the maximum signal swing. It is seen from FIG. 3 that because V_{TH} is located within V_{off}, receiver 200 fails to detect the digital signal.

Accordingly, the offset voltage V_{off} that is caused by the video signal coupled to path 103 needs to be removed (canceled) to detect the digital signal. One scheme that may be used to remove the unwanted signal is disclosed in our U. S. Patent No. 5,371,736 issued December 6, 1994, which is hereby incorporated by reference. A broad block diagram of the circuit discussed in the '736 patent is shown in FIG. 4, which is actually a somewhat modified version of receiver 200, FIG. 1. Specifically, peak-detector PKD, FIG. 1, is shown in FIG. 4 as a positive peak-detector P-PKD. FIG. 4 also includes a negative peak-detector N-PKD.

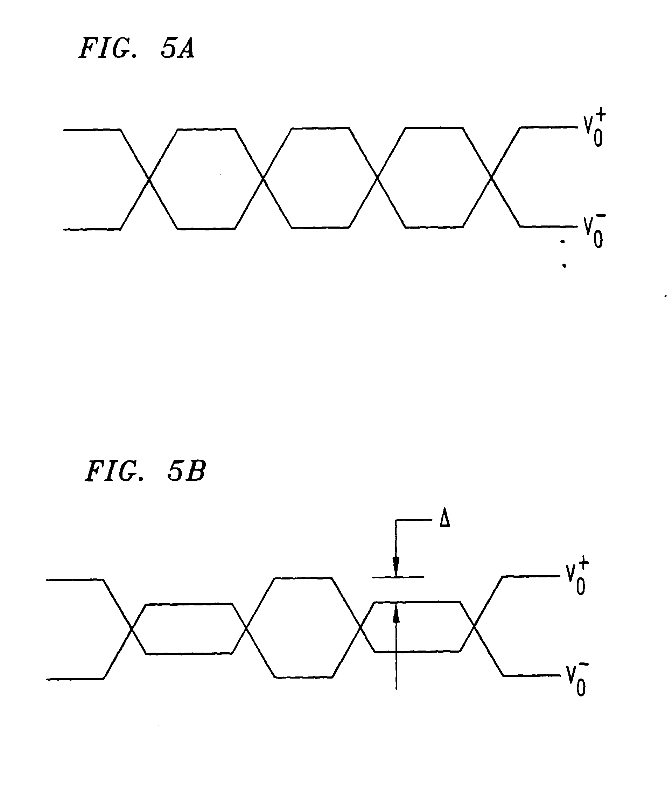

If incoming photocurrent Iᵢₙ does not contain low-frequency background current, then the outputs, Vₒ ⁺ and Vₒ ⁻, of preamplifier A3 are symmetrical as shown in FIG. 5A. if, on the other hand, Iᵢₙ contains low-frequency background current Iₒ, then Vₒ ⁺ and Vₒ ⁻ are not symmetrical, as shown in FIG. 5B, and the difference between their respective peaks is some value Δ. This difference in the signals, Δ, is stored in and supplied at the output of buffer B1 and is low-pass filtered by filter B2, FIG. 4, where it then controls the voltage controlled current source Cₛ. Current source Cₛ, in turn, subtracts the background current Iₒ from the incoming photocurrent Iᵢₙ such that only the current, I_{d}, due to the digital signal reaches the input of amplifier A₃. In this way, the waveforms of FIG. 5B are modified to resemble the desired waveforms of FIG. 5A. Accordingly, FIG. 4 operates, in accord with an aspect of the invention, to cancel the low frequency component due to the interfering signal without eliminating (canceling) the low frequency component due to the digital signal, and, therefore, has a high-degree of immunity to interfering signals.

The foregoing is merely illustrative of the principles of the invention. Those skilled in the art will be able to devise numerous arrangements, which, although not explicitly shown or described herein, nevertheless embody the invention.

## Claims

1. A method of operating a digital data receiver having a high-degree of immunity to a plurality of interfering signals, said method comprising the steps of
receiving first and second signals at an input such that said second signal interferes with detecting said first signal at the data receiver, said second signal incorporating a low frequency component and also a portion of the frequency spectrum that is higher than that of the first signal, and
filtering said second signal to eliminate said portion of the frequency spectrum that is higher than that of the first signal and to eliminate said low frequency component of said second signal without affecting any low frequency component of the first signal.

2. The method of claim 1 wherein said first signal is derived from an optical digital data signal and said second signal is derived from an optical video signal, said method further comprising the steps of
connecting said input to an optical WDM splitter via a photodetector as a way of receiving said first and second signals, said WDM splitter receiving said optical data signal and said optical video signal via an optical fiber.

3. The method of claim 1 further comprising the steps of
generating an offset signal, and
canceling the low frequency component of said second signal by means of the offset signal.

4. The method of claim 3 wherein said offset signal has a level substantially equal to the level of said low frequency component of said second signal.

5. A digital data receiver for selectively receiving a digital data signal when the data signal is accompanied by a video signal having an amplitude level exceeding the amplitude level of data signal, said receiver comprising
means for receiving said data and video signals at an input such that said video signal interferes with detecting said data signal at the data receiver, said video signal having a low frequency component and also a portion of the frequency spectrum that is greater than that of the data signal, and
means for generating an offset signal, and
means for canceling by means of said offset signal only the low frequency component of said video signal.

6. The receiver of claim 5 wherein said digital data signal is derived from an optical data signal and said video signal is derived from an optical video signal, said receiver further comprising
means for connecting said input to an optical WDM splitter via a photodetector as a way of receiving said data and video signals, said WDM splitter receiving said optical data signal and said optical video signal via an optical fiber.

7. The receiver of claim 6 wherein said offset signal has a level substantially equal to the level of said low frequency component of said video signal.
